# EUROPEAN PATENT SPECIFICATION

(11) **EP 2 904 904 B1**
(45) Date of publication and mention of the grant of the patent: **14.09.2016**
(21) Application number: 15153834.5
(22) Date of filing: 04.02.2015
(51) Int. Cl.: A21C 1/02, A21C 1/14, B01F 7/00, B01F 7/16, B01F 9/12, B01F 15/00

(54) **KNEADING MACHINE FOR A FOOD DOUGH**
KNETMASCHINE FÜR LEBENSMITTELTEIG
MACHINE DE MALAXAGE POUR PÂTE ALIMENTAIRE

(30) Priority: 05.02.2014 IT MI20140166
(43) Date of publication of application: 12.08.2015
(73) Proprietor: Steno - F.LLI Nazzari S.N.C., 27043 Broni (PV) (IT)
(72) Inventor: Mazza, Giovanni, 22041 COLVERDE (CO) (IT)
(74) Representative: Ottazzo, Marco Francesco Agostino

(56) References cited:
- WO-A1-2011/155385
- DE-A1- 2 153 704
- DE-A1- 2 400 432
- FR-A1- 2 546 719
- GB-A- 1 574 280

## Description

The present invention refers to a kneading machine for food doughs.

Kneading machines are used mainly in bakeries, in pizzerias and in industrial or artisan pastry-makers to knead wheat meal with water, yeast, salt, sourdough, sugar, etc. Basically, there are two different types of kneading machines, in other words planetary or orbital kneading machines and so-called spiral kneading machines.

In particular, spiral kneading machines are usually provided with a substantially cylinder-shaped tank, generally made of stainless steel respecting specific hygiene and food safety standards, inside which, in offset position with respect to the axis of the tank, a generally spiral-shaped arm tool is mobile, which is set in rotation in the tank.

The configuration of the arm is such as to create complete mixing stresses in the dough, also in the vertical direction. The arm is normally equipped with elements that operate also as a blade, to divide the kneaded mass, in order to cause it to be aeration and cause advantageous effects in the characteristics of the dough that reflect in the quality of the oven-baked product obtained with it.

The arm tool, rotating about its own axis, generates a stretching and drawing action of the gluten shield of the dough. As well as the tool, the tank can also be configured to rotate about its axis, so as to facilitate kneading. The tank can be either of the fixed type, or of the removable type, or even of the folding type. This last type of tank facilitates the emptying operations, since it is able to tip out the dough on the work surface.

The kneading arm that rotates with a circular trajectory in the tank, for obvious reasons of geometry, has maximum speed of movement in the dough as it gets closer to the periphery of the cylindrical tank, whereas such a speed decreases as it gets closer to the axis of the tank itself, where the peripheral speed of the arm is minimal. It is clear that the mass to be kneaded that is located at the centre of the bottom of the tank is subjected to minimal mixing, insufficient to obtain the desired effects. Sometimes, at the bottom of the tank a generically conical projecting body is provided, which in the rest of the description for the sake of brevity is called "protrusion", which prevents any of the mass to be kneaded from sitting in that position, so that no material stays there and escapes the kneading action.

Document GB 1 574 280 A illustrates a known kneading machine. Document DE 24 00 432 A1, on the other hand, illustrates a chocolate tempering machine provided with a rotary mixing tool.

Kneading machines of the arm type are considered ideal for working even very hard doughs, thanks to the substantial mechanical force that the tool is capable of applying even at low speeds. Particularly in the case of working relatively hard doughs the action of this conical protrusion of the bottom proves to be not very efficient in obtaining effective uniformity of the mixing action in the entire mass being worked, due to the standstill of material that can occur in the central area of the tank, in particular close to its bottom.

A drawback of known arm kneading machines is due to the fact that, during every single rotation cycle, the arm tool applies an almost uniform and constant movement to the dough. The Applicant, on the other hand, has observed that obtaining a discontinuous movement of the dough, with alternated lowering and raising stages of the dough itself during the rotation cycle of the arm tool can allow the quality of such dough to be improved.

The purpose of the present invention is therefore to make a kneading machine for foods, in particular a kneading machine for food doughs of the rotary arm type in a cylindrical tank, which is able to overcome the aforementioned drawback of the prior art in an extremely simple, cost-effective and particularly functional manner.

In detail, a purpose of the present invention is to make a kneading machine for food doughs that is able to increase the stretching and drawing action of the gluten shield of the dough with respect to similar known kneading machines.

Another purpose of the present invention is to make a kneading machine for food doughs that is able to improve the oxygenation of the dough during the relative mixing steps.

These purposes according to the present invention are accomplished by making a kneading machine for food, in particular but not exclusively a kneading machine for food doughs of the spiral type, as outlined in claim 1.

Further characteristics of the invention are highlighted by the dependent claims, which are an integral part of the present description.

The characteristics and advantages of a kneading machine for food doughs according to the present invention will become clearer from the following description, given as an example and not for limiting purposes, referring to the attached schematic drawings, in which:
figure 1 is a side elevational view of a first embodiment of the kneading machine for food doughs according to the present invention, shown in a first operative configuration;
figure 2 is a plan view from above of the kneading machine in the operative configuration of figure 1;
figure 3 is a side elevational view of the kneading machine of figure 1, shown in a second operative configuration;
figure 4 is a plan view from above of the kneading machine in the operative configuration of figure 3;
figure 5 is a side elevational view of the kneading machine of figure 1, shown in a third operative configuration;
figure 6 is a plan view from above of the kneading machine in the operative configuration of figure 5;
figure 7 is a partial side elevational view of a second embodiment of the kneading machine for food doughs according to the present invention; and
figure 8 is a plan view from above of the kneading machine of figure 7.

With reference to the figures, two distinct embodiments of the kneading machine for food doughs according to the present invention are shown, wholly indicated with reference numeral 10. The kneading machine 10, in a *per sé* known way, comprises a substantially cylindrically-shaped tank 12, provided with a circular base or bottom 14 and with a side wall 16 of predetermined height.

Inside the tank 12 at least one tool 18 in the form of a generically spiral-shaped arm is housed, activated in rotation by a motor (not shown) to move about an axis substantially parallel and close to the vertical axis of the tank 12 both in the case of so-called spiral kneading machines, and in the case of planetary or orbital kneading machines. The tool 18 is provided at the bottom with at least one plate 20 that extends close to the bottom 14 of the tank 12. The plate 20, rotating as a unit with the tool 18, facilitates the movement and the mixing of the dough preventing material from sitting untouched on the bottom.

Coming out from the bottom 14 of the tank 12, a protrusion 22 having the shape of a generic solid of revolution with vertical axis of symmetry, is also fixed, preferably through a vertical pin 24. Preferably, as shown in the figures, such a protrusion 22 is frusto-conical in shape, upwardly tapered.

The presence of the protrusion 22 inside the tank 12 works to further facilitate the handling and mixing of the dough carried out by the tool 18. The plate 20 is provided with a first end 20A configured to remain substantially close to the side wall 16, as well as with a second end 20B, opposite such a first end 20A, configured to face the protrusion 22. The plate 20 is also provided with side walls having a convex shape to further facilitate the handling and mixing of the dough.

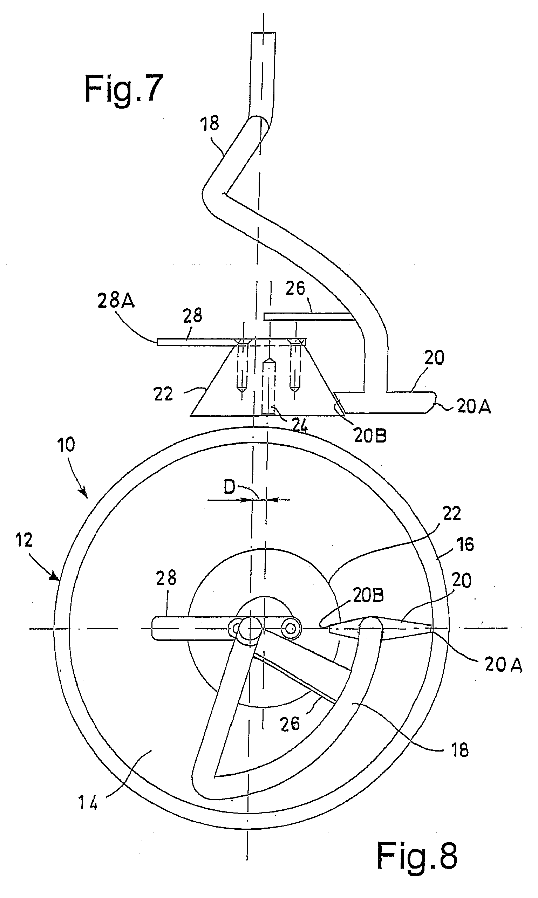

According to the invention, the protrusion 22 is arranged eccentrically with respect to the circular base 14 of the tank 12, so that the eccentricity, defined as the distance D (figure 8) of the vertical axis of the protrusion 22 with respect to the vertical axis of the tank 12, passing through the centre of the circular base 14, is variable between 5% and 20% of the total length of the radius of the base 14 itself. Preferably, the distance D of the vertical axis of the protrusion 22 with respect to the vertical axis of the tank 12 is variable between 6% and 10% of the total length of the radius of the base 14 itself.

In addition, the maximum height H1 of the protrusion 22 with respect to the base 14 is variable between 10% and 50% of the total height H2 of the tank 12, preferably between 20% and 30% of the total height H2 of the tank 12. In this way, the dough, when pushed by the tool 18, is able to move in a discontinuous manner also in the region of space of the tank 12 arranged above the protrusion 22.

In the case of fastening the protrusion 22 with the vertical pin 24, the vertical axis of symmetry of such a protrusion 22 overlaps the axis of such a vertical pin 24. The variation of the eccentricity of the protrusion 22 is a function of the minimum amount of dough that is wished to be kneaded inside the tank 12.

The eccentricity of the protrusion 22 has demonstrated a surprisingly advantageous effect in allowing the dough, when pushed by the tool 18 and by the relative plate 20, to move in a discontinuous manner, with alternated lowering and raising stages, during each single rotation cycle of the tool 18. The advantageous effect can be explained considering that the even modest eccentricity of the protrusion 22 prevents the dough contained close to the base 14 from moving in a circular direction pushed by the tool 18, since it does not sit in a circular crown-shaped area that is able to rotate, but the mass is slowed down when the tool 18 pushes it in the portion of the base 14 that tapers going from the area in which the distance between the protrusion 22 and the side wall 16 of the tank 12 is at its maximum and the diametrically opposite area, where such a distance is at the minimum, necessarily forcing the dough to rise vertically and with extremely advantageous mixing effect.

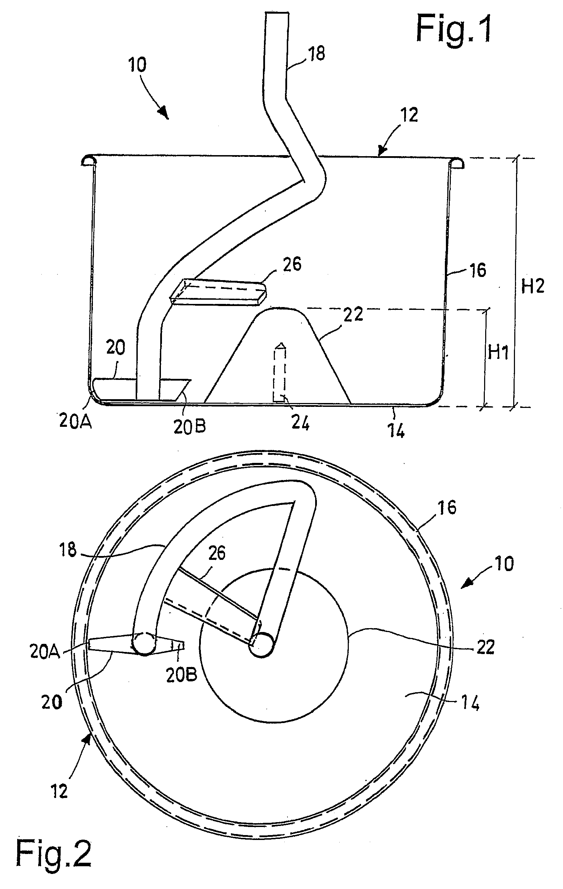

Moreover, during the rotary movement of the tool 18, when the plate 20 is at the widest portion of the base 14 (operative configuration of figures 1 and 2), the dough is substantially pushed along a mainly horizontal plane. In this operative configuration the second end 20B of the plate 20 is at a predefined distance from the protrusion 22, generating a sort of "way of escape" for the dough.

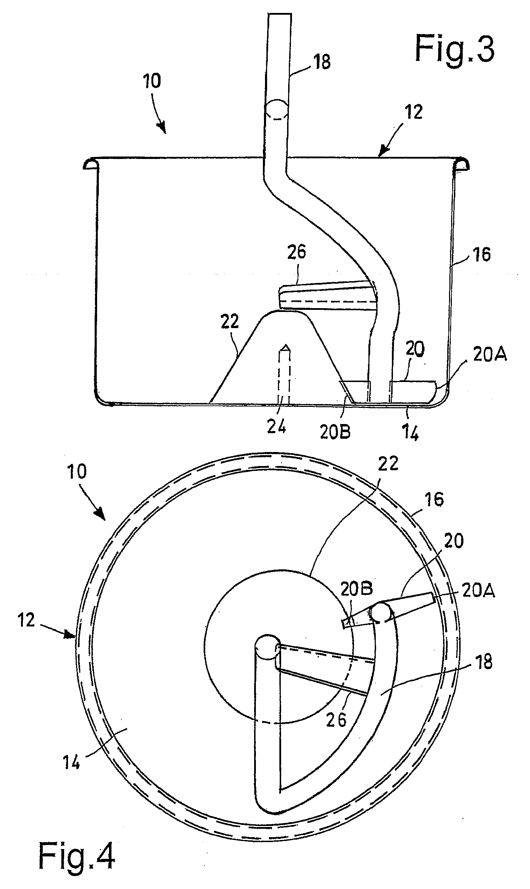

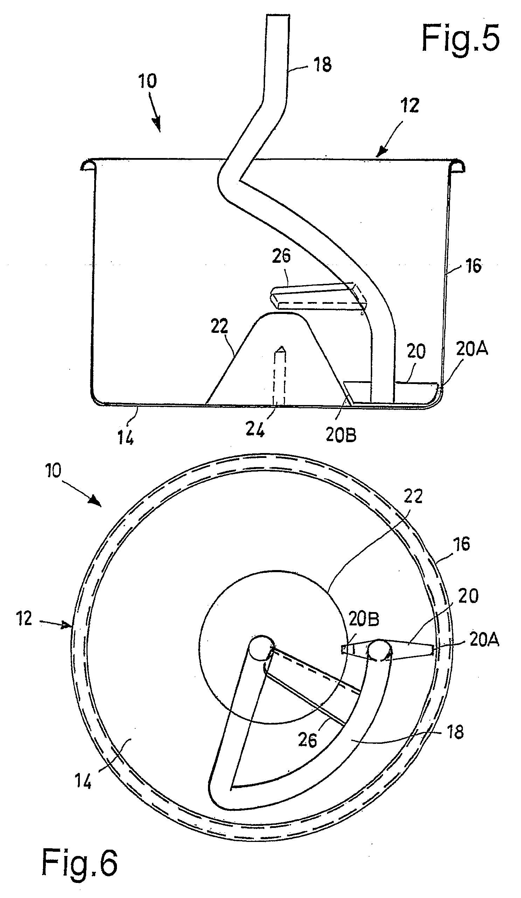

When, on the other hand, the plate 20 approaches the narrowest portion of the base 14, determined by the eccentricity of the protrusion 22 (operative configurations of figures 3-6), the second end 20B of the plate 20 in turn approaches the protrusion 22 until there is a possible sliding contact between these two components. The possible sliding contact is promoted by the particular configuration of the second end 20B of the plate 20, which is substantially parallel to the conical frustum-shaped wall of the protrusion 22. This closing of the passage section through which the dough is pushed, together with the fact that in the narrowest portion of the base 14 such a passage section is further "narrowed", applies a lifting movement on the dough itself that contributes to improving its qualities.

Preferably, the tool 18 can be provided with one or more cutting implements 26 that, moving as a unit with such a tool 18, are able to break the dough being worked and facilitating thereby the oxygenation thereof. The cutting implements 26 are arranged above the upper end of the protrusion 22, so as not to interfere with such a protrusion 22 and not to compromise the correct movement of the tool 18.

As shown in figures 7 and 8, on the upper end of the protrusion 22 a back plate 28 can be fixed, arranged along a plane substantially horizontal and parallel to the development plane of the base 14 of the tank 12. The back plate 28 (fixed) cooperates with the cutting implement 26 (mobile), which is arranged immediately above the back plate 28 itself, to make the progressive stages of aggregation and disaggregation of the dough during the rotation of the tool 18 more effective. The free end 28A of the back plate 28 is advantageously made with a bevelled profile.

It has thus been seen that the kneading machine for food doughs according to the present invention achieves the purposes outlined earlier.

The circumstance that the improving effect of the kneading action is obtained with relatively little eccentricity of the protrusion 22, of the order of a few centimetres, leads to the advantageous characteristic that the invention does not prevent the tank 12 in the kneading machine from keeping a configuration such that the arm tool 18 can be replaced with an orbital mixing tool, so as to be able to foresee for the machine to be equipped with interchangeable equipment for working doughs of different kinds and for different purposes. This effect would not be obtained if the improvement of the kneading action were obtained with the use of elements projecting radially from the wall of the tank 12, which would prevent the free movement of *per se* known orbital tools. The tank 12 can thus be advantageously used both on planetary or orbital kneading machines, which are able to carry out multiple additional processes with respect to the dough, and on kneading machined dedicated exclusively to dough.

The kneading machine for food doughs of the present invention thus conceived can in any case undergo numerous modifications and variants, all of which are covered by the same inventive concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Kneading machine (10) for foods, in particular food doughs, comprising:
- a substantially cylindrically-shaped tank (12), provided with a circular base or bottom (14) and with a side wall (16) having a predefined height;
- at least one tool (18) in the form of an arm housed inside the tank (12) and activated in rotation by a motor to complete at least one movement about an axis substantially parallel and close to the vertical axis of the tank (12);
- a protrusion (22) having the shape of a generic solid of revolution with vertical axis, coming out from the bottom (14) of the tank (12),
wherein
the protrusion (22) is arranged eccentric with respect to the circular bottom (14), **characterized in that** the eccentricity, defined as the distance (D) of the vertical axis of said protrusion (22) with respect to the vertical axis of the tank (12) is variable between 5% and 20% of the total length of the radius of said bottom (14), the eccentricity of said protrusion (22) allowing the dough, when pushed by the tool (18), to move in a discontinuous manner, with alternated lowering and raising stages, during each single rotation cycle of said tool (18), and **in that** the maximum height (H1) of said protrusion (22) with respect to said bottom (14) is variable between 10% and 50% of the total height (H2) of the tank (12), so that the dough, when pushed by the tool (18), is able to move in a discontinuous manner also in the region of space of the tank (12) arranged above the protrusion (22).

2. Kneading machine (10) according to claim 1, **characterized in that** the distance (D) of the vertical axis of said protrusion (22) with respect to the vertical axis of the tank (12) is variable between the 6% and the 10% of the total length of the radius of said bottom (14).

3. Kneading machine (10) according to claim 2, **characterized in that** the tool (18) is provided in its lower part with at least one plate (20) extending in proximity of the bottom (14) of the tank (12), rotating integrally with said tool (18) to facilitate the handling and the mixing of the dough.

4. Kneading machine (10) according to claim 3, **characterized in that** the plate (20) is provided with a first end (20A) configured to be substantially adherent to the side wall (16), as well as with a second end (20B), opposite to said first end (20A), configured to face the protrusion (22).

5. Kneading machine (10) according to claim 4, **characterized in that** the protrusion (22) has a conical frustum-shape tapered upwardly.

6. Kneading machine (10) according to claim 5, **characterized in that** the second end (20B) of the plate (20) has such a configuration to be substantially parallel to the conical frustum-shaped wall of the protrusion (22), so as to allow, during the tool (18) rotation and in certain operating conditions of the kneading machine (10), a sliding contact between the plate (20) and the protrusion (22).

7. Kneading machine (10) according to any one of claims 1 to 6, **characterized in that** the protrusion (22) is fixed above the base (14) by means of a vertical pin (24), the vertical axis of said protrusion (22) overlapping the axis of said vertical pin (24).

8. Kneading machine (10) according to any one of claims 1 to 7, **characterized in that** the tool (18) is provided with one or more cutting implements (26) which, moving integrally with said tool (18), are able to break the dough in process, facilitating thereby the oxygenation thereof.

9. Kneading machine (10) according to claim 8, **characterized in that** said one or more cutting implements (26) are arranged above the upper end of the protrusion (22), so as to not interfere with said protrusion (22) and to not compromise the correct movement of the tool (18).

10. Kneading machine (10) according to claim 8 or 9, **characterized in that** on the upper end of the protrusion (22) a back plate (28) is fixed arranged along a plane substantially horizontal and parallel to the development plane of the base (14), said back plate (28) cooperating with said one or more cutting implements (26) to make the progressive stages of aggregation and disaggregation of the dough during the rotation of the tool (18) more efficient.

11. Kneading machine (10) according to claim 10, **characterized in that** said one or more cutting implements (26) are arranged immediately above the back plate (28).

## Patentansprüche

1. Knetmaschine (10) für Lebensmittel, insbesondere für Lebensmittelteige, umfassend:
- einen im Wesentlichen zylinderförmigen Behälter (12), der mit einer kreisförmigen Basis oder Boden (14) und einer Seitenwand (16) versehen ist, die eine vorgegebene Höhe aufweist;
- mindestens ein Werkzeug (18) in Form eines Arms, der in dem Behälter (12) untergebracht ist und von einem Motor drehbar ausgelöst wird, um mindestens eine Bewegung um eine Achse auszuführen, die im Wesentlichen parallel und nahe der vertikalen Achse des Behälters (12) verläuft;
- einen Fortsatz (22), der die Form eines gattungsgemäßen Rotationkörpers mit vertikaler Achse aufweist und aus dem Boden (14) des Behälters (12) austritt, wobei der Fortsatz (22) exzentrisch bezüglich des kreisförmigen Bodens (14) angeordnet ist, **dadurch gekennzeichnet, dass** die Exzentrizität, definiert als Abstand (D) der vertikalen Achse des Fortsatzes (22) von der vertikalen Achse des Behälters (12), zwischen 5 % und 20 % der Gesamtlänge des Radius des Bodens (14) veränderlich ist, wobei die Exzentrizität des Fortsatzes (22) es dem Teig ermöglicht, wenn er vom Werkzeug (18) geschoben wird, während jedes einzelnen Rotationszyklus des Werkzeugs (18) diskontinuierlich, mit wechselweise angehobenen und abgesenkten Stufen bewegt zu werden, sowie dadurch, **dass** die maximale Höhe (H1) des Fortsatzes (22) in Bezug auf den Boden (14) zwischen 10 % und 50 % der Gesamthöhe (H2) des Behälters (12) veränderlich ist, so dass der Teig, wenn er vom Werkzeug (18) geschoben wird, in der Lage ist, auch in dem Raumbereich des Behälters (12) diskontinuierlich bewegt zu werden, der oberhalb des Fortsatzes (22) angeordnet ist.

2. Knetmaschine (10) nach Anspruch 1, **dadurch gekennzeichnet, dass** der Abstand (D) der vertikalen Achse des Fortsatzes (22) von der vertikalen Achse des Behälters (12) zwischen 6 % und 10 % der Gesamtlänge des Radius des Bodens (14) veränderlich ist.

3. Knetmaschine (10) nach Anspruch 2, **dadurch gekennzeichnet, dass** das Werkzeug (18) in seinem unteren Teil mit mindestens einer Platte (20) versehen ist, die sich in der Nähe des Bodens (14) des Behälters (12) erstreckt und sich fest mit dem Werkzeug (18) dreht, um das Bearbeiten und Mischen des Teigs zu erleichtern.

4. Knetmaschine (10) nach Anspruch 3, **dadurch gekennzeichnet, dass** die Platte (20) mit einem ersten Ende (20A) versehen ist, das ausgebildet ist, um im Wesentlichen an der Seitenwand (16) anzuhaften, sowie mit einem zweiten Ende (20B), gegenüber dem ersten Ende (20A), das ausgebildet ist, um dem Fortsatz (22) zugewandt zu sein.

5. Knetmaschine (10) nach Anspruch 4, **dadurch gekennzeichnet, dass** der Fortsatz (22) die Form eines sich nach oben verjüngenden Kegelstumpfes aufweist.

6. Knetmaschine (10) nach Anspruch 5, **dadurch gekennzeichnet, dass** das zweite Ende (20B) der Platte (20) derartig ausgebildet ist, dass es im Wesentlichen parallel zur kegelstumpfförmigen Wand des Fortsatzes (22) verläuft, um während der Rotation des Werkzeugs (18) und in bestimmten Betriebszuständen der Knetmaschine (10) einen Gleitkontakt zwischen der Platte (20) und dem Fortsatz (22) zu ermöglichen.

7. Knetmaschine (10) nach einem beliebigen der Ansprüche 1 bis 6, **dadurch gekennzeichnet, dass** der Fortsatz (22) oberhalb der Basis (14) mittels eines vertikalen Stifts (24) befestigt ist, wobei die vertikale Achse des Fortsatzes (22) die Achse des vertikalen Stifts (24) überlappt.

8. Knetmaschine (10) nach einem beliebigen der Ansprüche 1 bis 7, **dadurch gekennzeichnet, dass** das Werkzeug (18) mit einem oder mehreren Schneidwerkzeugen (26) versehen ist, die sich fest mit dem Werkzeug (18) bewegen und in der Lage sind, den Teig während der Bearbeitung zu brechen, wodurch die Sauerstoffanreicherung begünstigt wird.

9. Knetmaschine (10) nach Anspruch 8, **dadurch gekennzeichnet, dass** das eine oder die mehreren Schneidwerkzeuge (26) oberhalb des oberen Endes des Fortsatzes (22) angeordnet sind, um den Fortsatz (22) nicht zu stören und die korrekte Bewegung des Werkzeugs (18) nicht zu beeinträchtigen.

10. Knetmaschine (10) nach Anspruch 8 oder 9, **dadurch gekennzeichnet, dass** am oberen Ende des Fortsatzes (22) eine rückwärtige Platte (28) befestigt ist, die längs einer im Wesentlichen horizontal und parallel zur Abwicklungsebene der Basis (14) verlaufenden Ebene angeordnet ist, wobei die rückwärtige Platte (28) mit einem oder mehreren Schneidwerkzeugen (26) zusammenwirkt, um die aufeinanderfolgenden Stufen des Zusammenführens und Aufbrechens des Teigs während der Rotation des Werkzeugs (18) effizienter zu machen.

11. Knetmaschine (10) nach Anspruch 10, **dadurch gekennzeichnet, dass** das eine oder die mehreren Schneidwerkzeuge (26) unmittelbar oberhalb der rückwärtigen Platte (28) angeordnet sind.

## Revendications

1. Machine de malaxage (10) pour produits alimentaires, en particulier des pâtes alimentaires, comprenant :
- un réservoir de forme sensiblement cylindrique (12), munie d'une base ou fond circulaire (14) et avec une paroi latérale (16) ayant une hauteur prédéfinie ;
- au moins un outil (18) sous la forme d'un bras logé à l'intérieur du réservoir (12) et actionné en rotation par un moteur pour accomplir au moins un mouvement autour d'un axe sensiblement parallèle et proche de l'axe vertical du réservoir (12) ;
- une protubérance (22) ayant la forme d'un solide de révolution générique avec axe vertical, sortant du fond (14) du réservoir (12), dans laquelle la protubérance (22) est agencée excentrique par rapport au fond circulaire (14), **caractérisée en ce que** l'excentricité, définie comme la distance (D) de l'axe vertical de ladite protubérance (22) par rapport à l'axe vertical du réservoir (12) est variable entre 5% et 20% de la longueur totale du rayon dudit fond (14), l'excentricité de ladite protubérance (22) permettant à la pâte, quand elle est poussée par l'outil (18), de se déplacer d'une manière discontinue, avec des phases alternées de descente et de montée, durant chaque cycle de rotation individuel dudit outil (18), et **en ce que** la hauteur maximale (H1) de ladite protubérance (22) par rapport audit fond (14) est variable entre 10% et 50% de la hauteur totale (H2) du réservoir (12), de manière que la pâte, quand elle est poussée par l'outil (18), est en mesure de se déplacer d'une manière discontinue également dans la région d'espace du réservoir (12) disposée au-dessus de la protubérance (22).

2. Machine de malaxage (10) selon la revendication 1, **caractérisée en ce que** la distance (D) de l'axe vertical de ladite protubérance (22) par rapport à l'axe vertical du réservoir (12) est variable entre 6% et 10% de la longueur totale du rayon dudit fond (14).

3. Machine de malaxage (10) selon la revendication 2, **caractérisée en ce que** l'outil (18) est muni dans sa partie inférieure d'au moins une plaque (20) s'étendant à proximité du fond (14) du réservoir (12), tournant solidairement avec ledit outil (18) pour faciliter la manipulation et le mélange de la pâte.

4. Machine de malaxage (10) selon la revendication 3, **caractérisée en ce que** la plaque (20) est pourvue d'une première extrémité (20A) configurée pour être sensiblement adhérente à la paroi latérale (16), ainsi que d'une deuxième extrémité (20B), opposée à ladite première extrémité (20A), configurée pour faire face à la protubérance (22).

5. Machine de malaxage (10) selon la revendication 4, **caractérisée en ce que** la protubérance (22) a une forme tronconique effilée vers le haut.

6. Machine de malaxage (10) selon la revendication 5, **caractérisée en ce que** la deuxième extrémité (20B) de la plaque (20) a une configuration telle qu'elle soit sensiblement parallèle à la paroi tronconique de la protubérance (22), de manière à permettre, durant la rotation de l'outil (18) et dans certaines conditions de fonctionnement de la machine de malaxage (10), un contact glissant entre la plaque (20) et la protubérance (22).

7. Machine de malaxage (10) selon l'une quelconque des revendications 1 à 6, **caractérisée en ce que** la protubérance (22) est fixée au-dessus de la base (14) au moyen d'une broche verticale (24), l'axe vertical de ladite protubérance (22) se superposant à l'axe de ladite broche verticale (24).

8. Machine de malaxage (10) selon l'une quelconque des revendications 1 à 7, **caractérisée en ce que** l'outil (18) est équipé d'un ou plusieurs instruments tranchants (26) qui, en se déplaçant solidairement avec ledit outil (18), sont adaptés pour rompre la pâte en cours de traitement, en facilitant ainsi son oxygénation.

9. Machine de malaxage (10) selon la revendication 8, **caractérisée en ce que** lesdits un ou plusieurs instruments tranchants (26) sont disposés au-dessus de l'extrémité supérieure de la protubérance (22), de manière à ne pas interférer avec ladite protubérance (22) et à ne pas compromettre le mouvement correct de l'outil (18).

10. Machine de malaxage (10) selon la revendication 8 ou 9, **caractérisée en ce que** sur l'extrémité supérieure de la protubérance (22) est fixée une plaque dorsale (28) agencée suivant un plan sensiblement horizontal et parallèle au plan de développement de la base (14), ladite plaque dorsale (28) coopérant avec lesdits un ou plusieurs instruments tranchants (26) pour rendre plus efficaces des phases progressives d'agrégation et désagrégation de la pâte durant la rotation de l'outil (18).

11. Machine de malaxage (10) selon la revendication 10, **caractérisée en ce que** lesdits un ou plusieurs instruments tranchants (26) sont disposés immédiatement au-dessus de la plaque dorsale (28).
